# EUROPÄISCHE PATENTSCHRIFT

(11) **EP 3 238 329 B1**
(45) Veröffentlichungstag und Bekanntmachung des Hinweises auf die Patenterteilung: **18.11.2020**
(21) Anmeldenummer: 15819813.5
(22) Anmeldetag: 18.12.2015
(51) Int. Cl.: H02K 19/24, H02P 25/098, H02K 19/10, H02K 1/24, H02P 25/08

(54) **VERFAHREN ZUM BETRIEB EINER RELUKTANZMASCHINE SOWIE RELUKTANZMASCHINE**
METHOD FOR OPERATING A RELUCTANCE MACHINE, AND RELUCTANCE MACHINE
PROCÉDÉ DE FONCTIONNEMENT D'UNE MACHINE À RÉLUCTANCE ET MACHINE À RÉLUCTANCE

(30) Priorität: 23.12.2014 DE 102014019278
(43) Veröffentlichungstag der Anmeldung: 01.11.2017
(73) Patentinhaber: KSB SE & Co. KGaA, 67227 Frankenthal (DE)
(72) Erfinder: MÜLLER, Tobias, 67227 Frankenthal (DE); STEIN, Edgar, 67657 Kaiserslautern (DE)
(86) Internationale Anmeldenummer: PCT/EP2015/080453
(87) Internationale Veröffentlichungsnummer: WO 2016/102353

(56) Entgegenhaltungen:
- EP-A1- 1 635 439
- EP-A1- 1 635 439
- JP-A- 2000 308 383
- JP-A- 2000 308 383
- US-A- 5 532 567
- US-A- 6 081 087
- US-A1- 2002 190 674
- US-A1- 2002 190 674
- US-A1- 2015 280 502
- Anonymous: "Lessons In Electric Circuits -- Volume II (AC) - Chapter 13", , 2 July 2014 (2014-07-02), XP055681966, Retrieved from the Internet: URL:https://web.archive.org/web/2014070220 4104/https://book.huihoo.com/lessons-in-el ectric-circuits/AC/AC_13.html#xtocid121486 [retrieved on 2020-04-01]

## Beschreibung

Die Erfindung betrifft ein Verfahren zum Betrieb einer Reluktanzmaschine sowie eine derartige Reluktanzmaschine.

Aus dem Stand der Technik sind unterschiedliche Bauarten von Reluktanzmaschinen bekannt. Eine Bauart ist die Synchron-Reluktanzmaschine, die einen Rotor mit sog. Flusssperrenabschnitten zur Ausprägung von Rotorpolen aufweist. Der Stator der Synchron-Reluktanzmaschine verfügt meistens über eine dreisträngige Drehfeldwicklung, beispielsweise drei räumlich um je 120° versetzte Spulen, die von dreiphasiger Wechselspannung gespeist werden. Für das Betriebsverhalten der Maschine spielt die konstruktive Auslegung der Wicklungen eine maßgebliche Rolle. Durch die sinusförmige Bestromung der einzelnen Stränge werden alle magnetischen Systemgrößen auf sinusförmige Verläufe optimiert, um ein möglichst konstantes Drehmoment zu erhalten.

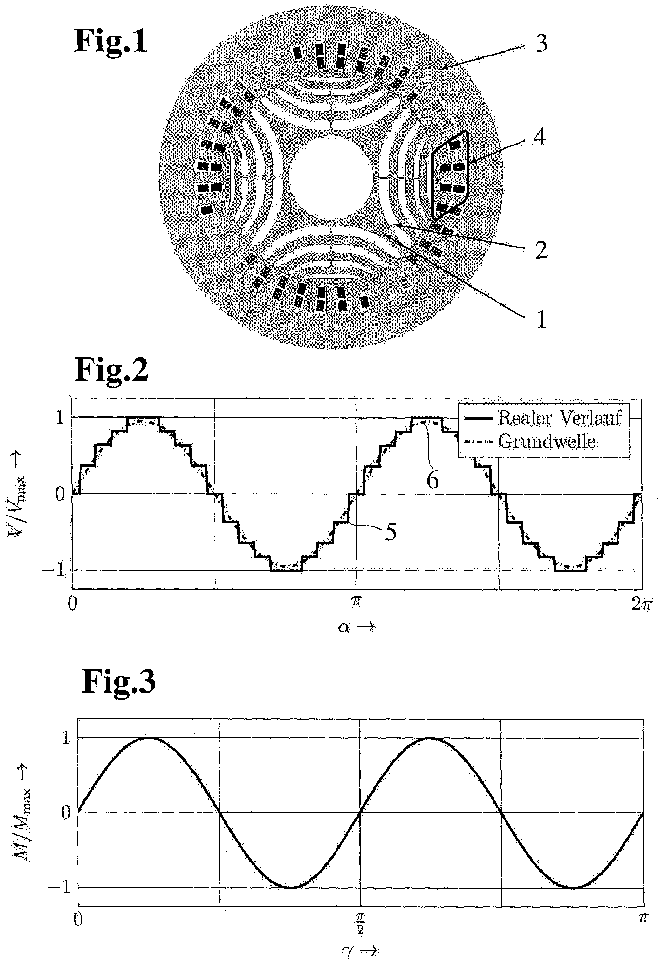

Figur 1 zeigt eine solche konventionelle Synchron-Reluktanzmaschine. Das Rotorblechpaket 1 weist die übliche Rotorgeometrie auf, mit bananenartigen Flusssperren 2 zur Ausbildung von Flusssperr- sowie Flussleitabschnitten. Die dargestellte Variante bildet einen Rotor 1 mit insgesamt zwei Polpaaren. Die konkrete Anordnung der Flusssperren 2 entspricht dem bekannten Design nach Vagati, beispielsweise offenbart in der US-Patentschrift US 5,818,140, auf die an dieser Stelle vollumfänglich Bezug genommen wird. Das Statorpaket 3 weist insgesamt drei Spulen mit Durchmesserwicklung auf, die zueinander um 120° versetzt sind. Mit den Bezugszeichen 4 ist eine Spulenseite eines Wicklungsstrangs markiert. Die Bestromung der Spulen erfolgt mittels sinusförmigem Stromverlauf, wobei die Phasen der Bestromung der unterschiedlichen Spulen um 120° verschoben sind.

Der Grundgedanke der gewählten Statorwicklung verfolgt das Ziel, den Oberwellenanteil der Felderregerkurve im Luftspalt gegenüber der Grundwelle möglichst klein zu halten, da nach bisheriger Auffassung nur die Grundwelle der Felderregerkurve für ein nutzbares Drehmoment sorgt und die Oberwellen lediglich unerwünschte parasitäre Effekte erzeugen. Die verteilte Anordnung der einzelnen Spulen erzeugt einen realen Verlauf 5 der Felderregerkurve wie sie in Figur 2 visualisiert dargestellt ist, d.h. eine Darstellung des räumlichen Verlaufs der magnetischen Spannung V über den Winkel a. Erkennbar ist, dass die Kurve 5 durch die gewählte Wicklungsart mit 36 Nuten der Sinusform 6 angenähert wird, sodass möglichst wenig magnetische Oberwellen im Luftspalt zwischen Stator 3 und Rotorblechpaket 1 auftreten.

In Verbindung mit dem speziellen Rotor 1 der Synchron-Reluktanzmaschine, welcher über gestanzte Flusssperren 2 verfügt, ergibt sich ein sinusförmiger Verlauf der magnetischen Flussdichte B im Luftspalt. Die Lage und Amplitude der Flussdichte ist dabei durch die Reluktanzänderung des Rotors 1, d. h. vom resultierenden Verdrehwinkel γ des Rotors abhängig. Diese, durch die Reluktanz des Rotors 1 hervorgerufene Flussdichteänderung im Luftspalt, ruft bei Verdrehung des Rotors ein wiederum sinusförmiges Drehmoment in Abhängigkeit des Verdrehwinkels γ hervor. Eine Darstellung des resultierenden Drehmomentes M der Synchron-reluktanzmaschine ist in Figur 3 dargestellt.

Durch die sinusförmige Bestromung stellt sich bei geeigneter Regelung der Maschine ein fester Verdrehwinkel γ gegenüber der Statorerregung ein, sodass eine kontinuierliche Drehbewegung mit näherungsweise konstantem Drehmoment erfolgt.

Die Maschinenkonstruktion der Figur 1 hat jedoch den Nachteil, dass zur Unterdrückung der Oberwellen und damit zur Erreichung des sinusförmigen Verlaufs eine sehr große Anzahl an Statornuten erforderlich ist. So wird für die Rotorgeometrie mit zwei Polpaaren eine Statorgeometrie mit insgesamt 36 Nuten notwendig, um das gewünschte Drehmomentverhalten zu erreichen.

Die EP 1 635 439 A1 sowie die US 2002/190674 zeigen Verfahren zum Betrieb einer Reluktanzmaschine, bei denen die Bestromungszustände in Abhängigkeit des Rotorwinkels sprunghaft geändert werden.

Ziel der vorliegenden Erfindung ist es, ein verbessertes Verfahren zum Betrieb einer Reluktanzmaschine aufzuzeigen, das den Einsatz einer vereinfachten Statorwicklung zulässt.

Gelöst wird diese Aufgabe durch ein Verfahren gemäß den Merkmalen des Anspruchs 1. Vorteilhafte Ausgestaltungen des Verfahrens sind Gegenstand der sich an den Hauptanspruch anschließenden Unteransprüche.

Erfindungsgemäß wird ein Verfahren zum Betrieb einer Reluktanzmaschine vorgeschlagen, wobei die Reluktanzmaschine einen Rotor umfasst, der aus einem weichmagnetischen Material und einer geradzahligen Anzahl an ausgeprägten Polen besteht. Die Rotorgeometrie ist dabei ähnlich, idealerweise identisch zum Rotordesign einer konventionellen Synchron-Reluktanzmaschinen, wie beispielsweise gemäß Figur 1, ausgestaltet. Das weichmagnetische Material des eingesetzten Rotors umfasst auch hier eine bestimmte Anzahl an Flusssperren, um bei entsprechender Bestromung der Reluktanzmaschine eine Ausprägung einer geradzahligen Anzahl an Polen zu erhalten. Es wird darauf hingewiesen, dass die Rotorgeometrie nicht auf die Verwendung von Permanentmagneten bzw. -spulen angewiesen ist. Idealerweise weisen Rotor und Stator dieselbe Polpaaranzahl auf.

Zusätzlich wird ein Stator mit einer mehrsträngigen, versetzten Durchmesserwicklung eingesetzt, wobei die Stränge der Durchmesserwicklung mit zueinander phasenverschobenen Strömen bestromt werden. Die notwendige Nutanzahl lässt sich gegenüber der Synchron-Reluktanzmaschine jedoch erfindungsgemäß dadurch reduzieren, dass die Wicklungen nicht mit einem sinusförmigen Stromverlauf bestromt werden, sondern die Reluktanzmaschine sequentiell geschaltet wird, das heißt die Strangströme werden mit konstanten Stromwerten bestromt, die im Betrieb sequentiell geändert werden. Dabei werden die Stromwerte der einzelnen Strangströme in Abhängigkeit des Rotorwinkels sprunghaft geändert. Sinnvollerweise werden die einzelnen Strangströme gleichzeitig geändert bzw. geschaltet, eine zeitverzögerte Änderung/Schaltung ist jedoch nicht ausdrücklich ausgeschlossen.

Bei dem erfindungswesentlichen Konzept der sequentiell bestromten Reluktanzmaschine spielt die Reluktanzänderung des Rotors in Verbindung mit einem vereinfachten Wicklungskonzept eine wesentliche Rolle. Der erfindungsgemäße Ansatz basiert auf der Ausnutzung der magnetischen Oberwellen im Luftspalt. Grundlage dafür ist die Eigenschaft, dass das Reluktanzmoment unabhängig von der Richtung des magnetischen Feldes ist. Dies führt bei entsprechender Bestromung der verwendeten Durchmesserwickelung zu rechteckförmigen Drehmomentverläufen. Um im Betrieb ein konstantes Drehmoment zu erzeugen, werden die Bestromungszustände der einzelnen Stränge erfindungsgemäß in Abhängigkeit des Rotorwinkels sprunghaft geändert.

Erfindungsgemäß wird für die Definition der Bestromungszustände der einzelnen Stränge auf zueinander phasenverschobene trigonometrische Funktionen zurückgegriffen. Zur Änderung der Bestromungszustände wird dann der Bestromungswinkel geändert, erfindungsgemäß um einen vordefinierten delta-Winkel. Beispielsweise wird für die Definition des Bestromungszustandes eine Cosinus- und/oder Sinus-Funktion gewählt. Die vorliegenden Bestromungszustände definieren sich dann über den aktuellen Bestromungswinkel. Zur Verfahrensdurchführung wird dieser Winkel beispielsweise für alle Stränge um einen definierten delta-Bestromungswinkel sequentiell weitergeschaltet. Die sequentielle Weiterschaltung erfolgt idealerweise für jeden Strang mit konstantem Delta-Bestromungswinkel.

Die Änderung der Bestromungszustände, insbesondere die Wahl eines geeigneten delta-Bestromungswinkels, erfolgt derart, dass die Nulldurchgänge der Harmonischen, d. h. der erzeugten Oberwellen im Luftspalt, der resultierenden Felderregerkurve zusammenfallen. Die Richtungsunabhängigkeit des Reluktanzmomentes von der Feldrichtung führt dabei für jede Harmonische zu einem positiven Anstieg des Drehmomentes aus dem Nullpunkt, wodurch bei Überlagerung der Nulldurchgänge alle Harmonischen im Luftspalt der gleiche Drehmomentverlauf entsteht. Dadurch lassen sich konkrete Bestromungszustände auswählen, bei denen ebenfalls die Oberwellen der Felderregerkurven zur Drehmomenterzeugung genutzt werden können.

Erfindungsgemäß wird der Delta-Bestromungswinkel gemäß der Gleichung β=2π/(2*p*s) gewählt, wobei p die Anzahl der Polpaare des Rotors und/oder Stators und s die Strangzahl des Stators ist.

Durch die erfindungsgemäße sequentielle sprunghafte Änderung der Bestromungszustände kann ein Stator mit reduzierter Nutanzahl und damit vereinfachtem Wicklungsschema mit dem Rotordesign konventioneller Synchron-Reiuktanzmaschinen eingesetzt werden, ohne Einschränkungen beim resultierenden Rotordrehmoment in Kauf nehmen zu müssen.

Idealerweise erfolgt die Schaltung der Bestromungszustände in Richtung des magnetischen Flusses innerhalb des Luftspaltes, d. h. in Rotordrehrichtung. Dadurch stellt sich eine homogene Verteilung der Flussdichte über den gesamten Rotorumfang ein, wodurch auch bei reduzierter Anzahl an Statornuten ein gutes Betriebsverhalten des Motors erreicht werden kann.

Bei der dargestellten Reluktanzmaschine ist das Drehmoment abhängig vom vorliegenden Verdrehwinkel des Rotors gegenüber dem Stator. Für den Schaltzeitpunkt zur Änderung der Bestromungszustände wird vorzugsweise ein Zeitpunkt kurz vor oder beim Erreichen des Verdrehwinkels mit maximalem Drehmoment für den nachfolgenden Bestromungszustand gewählt.

Ein Umschaltzeitpunkt kurz vor Erreichen des maximalen Drehmoments ist insbesondere deswegen sinnvoll, da aufgrund der Induktivität der Wicklungen nur eine verzögerte Umschaltung möglich ist. Aus diesem Grund ist es ratsam, die Umschaltung vor Erreichen des maximalen Drehmomentes auszulösen, sodass der geänderte Bestromungszustand bei Erreichen des entsprechenden Verdrehwinkels des Rotors tatsächlich vorliegt.

Eine besonders bevorzugte Ausgestaltung der Erfindung setzt auf einen Rotor mit zwei Polpaaren, der exakt der Rotorgeometrie einer Synchron-Reluktanzmaschine entspricht. Der Stator umfasst eine zweisträngige um 90° versetzte Durchmesserwickelung, wobei der Stromverlauf der Stränge mit einer Cosinus- bzw. Sinusfunktion bestimmt wird. In diesem Fall erfolgt eine sequentielle Weiterschaltung des Bestromungswinkels um jeweils 45°, da bei dieser konkreten Rotorkonstruktion eine Überlagerung der Nulldurchgänge der Harmonischen auftritt. Die resultierende Statorkonstruktion umfasst insgesamt acht Nuten.

Ein alternatives Ausführungsbeispiel dazu sieht einen vierpotigen Rotor vor, wobei der Stator im Gegensatz zum vorherigen Ausführungsbeispiel mit einer dreisträngigen, um 120° versetzten Durchmesserwickelung ausgeführt ist. Der Stromverlauf der einzelnen Stränge wird in Anlehnung an eine Drehfeldmaschine durch Sinusfunktionen bestimmt, die jedoch für die einzelnen Stränge um 120° zueinander phasenverschoben sind. In diesem Fall erfolgt eine sequentielle Weiterschaltung des Bestromungswinkels um jeweils 30°, da in diesem Ausführungsbeispiel eine Überlagerung der Nulldurchgänge der Harmonischen nach 30° auftritt. Dieser Ansatz basiert auf einer Maschine mit zwölf Statornuten und zwei Polpaaren des Rotors.

Neben dem erfindungsgemäßen Verfahren betrifft die vorliegende Erfindung zudem eine Reluktanzmaschine mit einem Stator, der eine mehrsträngige Durchmesserwickelung umfasst, und mit einem Rotor aus weichmagentischem Material mit einer geradzahligen Anzahl an ausgeprägten Polpaaren, die durch die Anordnung von Flusssperren ausgebildet sind. Erfindungsgemäß umfasst die Reluktanzmaschine eine Motorsteuerung zur Ausführung des Verfahrens gemäß der vorliegenden Erfindung bzw. einer vorteilhaften Ausgestaltung der vorliegenden Erfindung. Die Reluktanzmaschine kennzeichnet sich damit offensichtlich durch dieselben Vorteile und Eigenschaften wie das erfindungsgemäße Verfahren, weshalb an dieser Stelle auf eine wiederholende Beschreibung verzichtet werden soll.

Die erfindungsgemäße Reluktanzmaschine umfasst vorzugsweise einen Stator mit insgesamt acht oder zwölf Statornuten zur Ausbildung einer zwei- oder dreisträngigen Durchmesserwickelung.

Weitere Vorteile und Eigenschaften der Erfindung sollen im Folgenden anhand von zwei in den Zeichnungen dargestellten Ausführungsbeispielen näher erläutert werden. Es zeigen:
- Fig. 1:: eine skizzenhafte Darstellung einer konventionell konstruierten Synchron-Reluktanzmaschine,
- Fig. 2:: der Verlauf der Felderregerkurve der Synchron-Reluktanzmaschine gemäß Fig. 1,
- Fig. 3:: eine Darstellung des Drehmomentverlaufs der Synchron-Reluktanzmaschine gemäß Fig. 1,
- Fig. 4:: eine skizzenhafte Darstellung der neuartigen Konstruktion einer Reluktanzmaschine gemäß der vorliegenden Erfindung,
- Fig. 5:: das erfindungsgemäße Wickelschema des Stators gemäß der Maschine aus Fig. 4,
- Fig. 6:: eine zeitliche Darstellung der sequentiell geschalteten Strangströme der erfindungsgemäßen Reluktanzmaschine gemäß Figur 4,
- Fig. 7:: eine Darstellung der Felderregerkurven für Momentanwerte der Strangströme der Maschine nach Figur 4,
- Fig. 8:: der resultierende Drehmomentverlauf in Abhängigkeit des Verdrehwinkels für die erfindungsgemäße Reluktanzmaschine gemäß Figur 4,
- Fig. 9:: eine Darstellung der Harmonischen der Felderregerkurven gemäß Fig. 7,
- Fig. 10:: eine alternative Ausgestaltung der erfindungsgemäßen Reluktanzmaschine,
- Fig. 11:: eine Darstellung der Harmonischen der Felderregerkurven für unterschiedliche Bestromungszustände der Reluktanzmaschine nach Fig. 10,
- Fig. 12:: eine zeitliche Darstellung der sequentiell geschalteten Strangströme der erfindungsgemäßen Reluktanzmaschine gemäß Figur 10,
- Fig. 13:: eine Darstellung der Felderregerkurven zweier Bestromungszustände der Reluktanzmaschine gemäß Fig. 10,
- Fig. 14:: eine Darstellung der Drehmomentverläufe zweier Bestromungszustände für die Reluktanzmaschine gemäß Fig. 10,
- Fig. 15:: eine Vergleichsdarstellung der Drehmomentverläufe der erfindungsgemäßen Reluktanzmaschine gemäß Figur 10 und einer konventionellen Synchron-Reluktanzmaschine gemäß Figur 1,
- Fig. 16:: ein Vergleich der im System enthaltenen magnetischen Energie der Maschinen gemäß Figur 1 und 10,
- Fig. 17:: ein Teilausschnitt der konventionellen Synchron-Reluktanzmaschine gemäß Figur 1 mit eingezeichnetem Verlauf der maximalen Flussdichte und
- Fig. 18:: ein Teilausschnitt der erfindungsgemäßen Reluktanzmaschine gemäß Figur 10 mit eingezeichnetem Verlauf der maximalen Flussdichte.

Bei dem Konzept der sequentiell bestromten Reluktanzmaschine spielt die Reluktanzänderung des Rotors in Verbindung mit einem vereinfachten Wicklungskonzept eine wesentliche Rolle. Die Rotorkonstruktion ist mit der einer Synchron-reluktanzmaschine (Figur 1) identisch. Der neue Ansatz basiert auf der Ausnutzung der magnetischen Oberwellen im Luftspalt. Grundlage dafür ist die Eigenschaft, dass das Reluktanzmoment unabhängig von der Richtung des magnetischen Feldes ist. Dies führt bei entsprechender Bestromung der Durchmesserwickelungen zu rechteckförmigen Drehmomentverläufen. Um im Betrieb ein konstantes Drehmoment zu erzeugen, werden die Bestromungszustände in Abhängigkeit des Rotorwinkels sprunghaft geändert.

Im folgenden Abschnitt werden die Eigenschaften anhand einer Reluktanzmaschine mit q = 8 Statornuten und p = 2 Polpaaren erläutert.

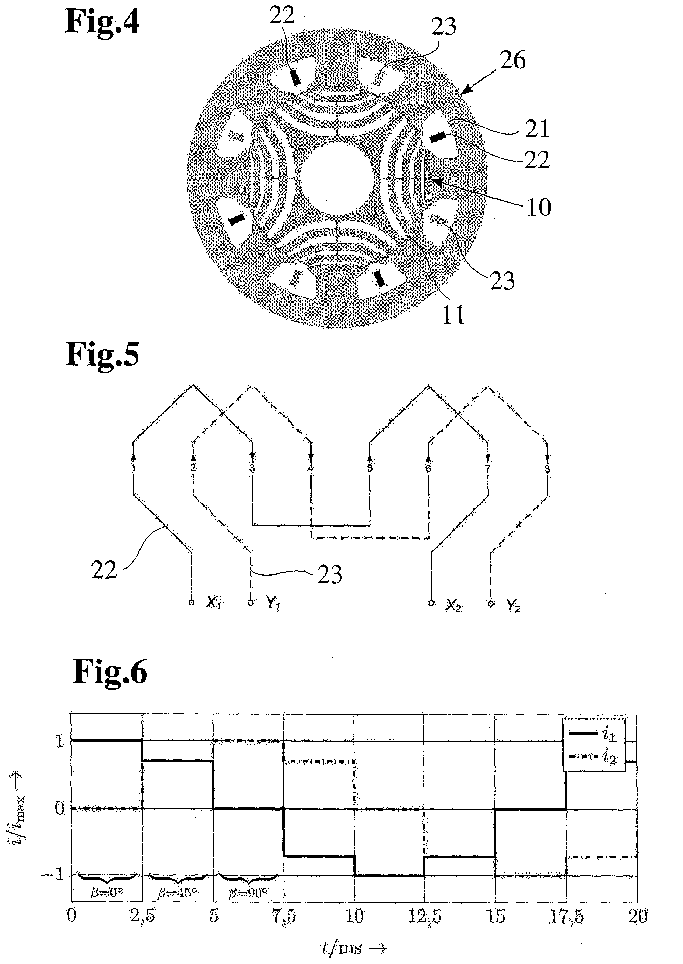

Die grundlegende Konstruktion dieser zweisträngigen Maschine ist in Fig. 4 dargestellt. Der Rotor 10 besteht aus einem weichmagnetischen Material mit einer bestimmten Anzahl an ausgestanzten Flusssperren 11, die den magnetischen Fluss hemmen und dadurch zwei Polpaare des Rotors 10 ausprägen. Die konkrete Anordnung sowie die Ausgestaltung dieser Flusssperren 11 basiert auf dem Vagati-Modell, bekannt aus der US-Patentschrift US 5,818,140, auf das an dieser Stelle vollumfänglich Bezug genommen wird.

Der Stator 20 umfasst, wie bereits beschrieben, insgesamt acht Nuten 21, die mit entsprechenden Wicklungen 22, 23 versehen sind. Insgesamt wird dadurch eine zweisträngige Maschine realisiert, deren Wicklungen 22, 23 jeweils um 90° versetzt angeordnet sind. Das verwendete Wickelschema ist der Figur 5 zu entnehmen.

Für die Bestromung der zweisträngigen Durchmesserwicklungen 22, 23 wird für die Durchmesserwickelung 22 eine Cosinus-Funktion (i₁) angenommen, während für die Durchmesserwicklung 23 eine Sinus-Funktion (i₂) verwendet wird. Der Bestromungswinkel wird im Folgenden als β bezeichnet, weshalb sich die folgenden Gleichungen für die jeweiligen Wickelungsströme ergeben:
i₁ = cos(β),
i₂ = sin(β).

Für die Bestromung der einzelnen Wicklungen 22, 23 wird jedoch kein kontinuierlicher Stromverlauf gewählt, sondern die Bestromung wird sequentiell geändert. Die anliegenden Strangströme werden durch die mathematische Funktion bestimmt. Der Stromverlauf basiert auf diskreten Bestromungswinkeln β, wobei diese gemäß dem erfindungsgemäßen Verfahren über einen definierten Delta-Bestromungswinkel weitergeschaltet werden. Der Bestromungswinkel β wird demnach zu konkreten Schaltzeitpunkten um einen Deltawert Δβ erhöht.

Der Verlauf der geschalteten Bestromung ist der Diagrammdarstellung der Figur 6 zu entnehmen. Hierbei wird für die Bestromung der Wicklung 22 der Strom i₁ gewählt, der auf Grundlage der Cosinusfunktion berechnet wird, während für die Wicklung 23 der Strom i₂ auf Grundlage der Sinusfunktion bestimmt wird. Dabei ist erkennbar, dass in dem gezeigten Diagramm bei einer Drehzahl von 1.500 Umdrehungen pro Minute und einer Polpaarzahl des Rotor von zwei eine Schaltung der Stromzustände etwa alle 2,5 ms erfolgt und zwar indem der Bestromungswinkel jeweils um jeweils Δβ = 45° erhöht wird.

Die Wahl der sequentiellen Weiterschaltung des Bestromungswinkels um jeweils Δβ = 45° soll im Folgenden anhand der nachfolgenden Figurendarstellungen erläutert werden.

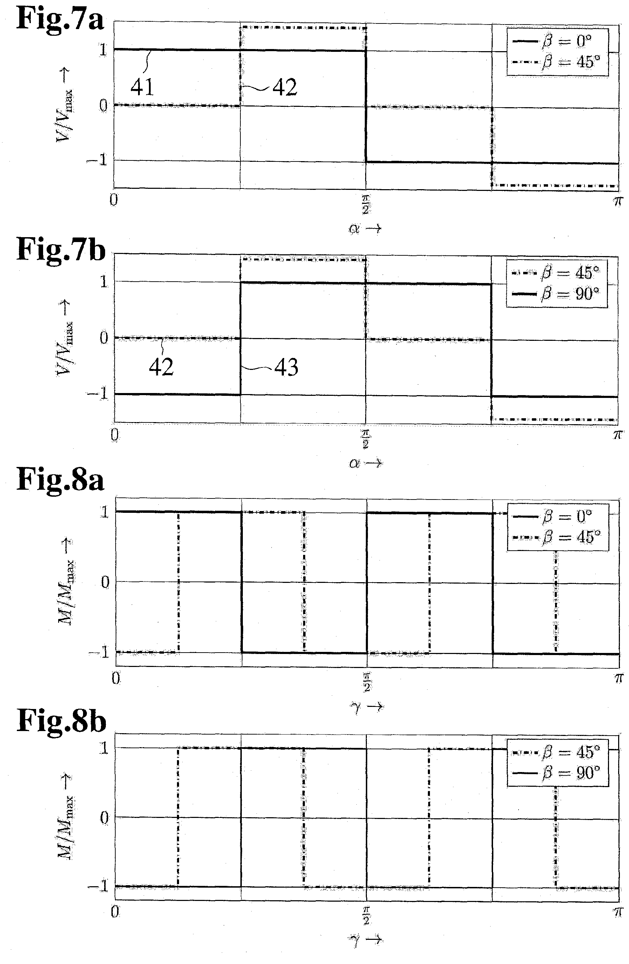

Figur 7a zeigt den Verlauf der resultierenden Felderregerkurven 40, 41 der zweisträngigen Wicklung 22, 23 bei Momentanwerten der Strangströme i₁, i₂ mit β=0° und β=45°, während Figur 7b die Felderregerkurven 41, 42 für die Momentanwerte der Strangströme i₁, i₂ mit β=45° und β=90° wiedergibt. Die Kurve 41 zeigt dabei den Verlauf der Felderregerkurve, der sich bei einem Bestromungszustand mit dem Winkel β = 0° einstellt. In diesem Zustand ist lediglich ein Strang 22 bestromt. Die zweite Kurve 42 zeigt den Verlauf der Felderregerkurve über den Umfang des Luftspaltes bei einer Weiterschaltung des Bestromungswinkels um 45°. In diesem Zustand ist nicht nur ein Strang aktiv, sondern beide Stränge 22, 23 sind entsprechend bestromt. Dadurch ergibt sich in der normierten Darstellung eine um etwa 0,4 höhere Amplitude der resultierenden Felderregerkurve 42. Die Kurve 43 zeigt die Felderregerkurve bei einer Bestromung mit dem Winkel β=90°. Zu diesem Zeitpunkt ist der Strom i₁ der Wicklung 22 inaktiv und der Strom i₂ nimmt die maximale Amplitude an.

Unter idealisierten Bedingungen führen die Felderregerkurven 41, 42, 43 zu einem rechteckförmigen Drehmomentverlauf, welcher um Δγ = β / p versetzt ist. Zur Verdeutlichung wird auf die Zeichnungen der Figuren 8a, 8b verwiesen, die die resultierende Drehmomente M in Abhängigkeit des Verdrehwinkels γ und der Felderregerkurven 41, 42, 43 bzw. der Bestromungswinkel β darstellen.

Zu sehen ist, dass das Drehmoment M für den Bestromungszustand β = 45° bei einem Verdrehwinkel von γ = π / 8 sein maximales Drehmoment erreicht. Eine Umschaltung des Bestromungszustandes von β=0° nach β=45° sollte daher im Bereich zwischen Erreichen des maximalen Drehmomentes des neuen Bestromungszustands β=45° und der Aufrechterhaltung des maximalen Drehmomentes des vorliegenden Bestromungszustands (β = 0°) erfolgen, d. h. bei einem Verdrehwinkel von γ, der zwischen π/8 und π/4 liegt.

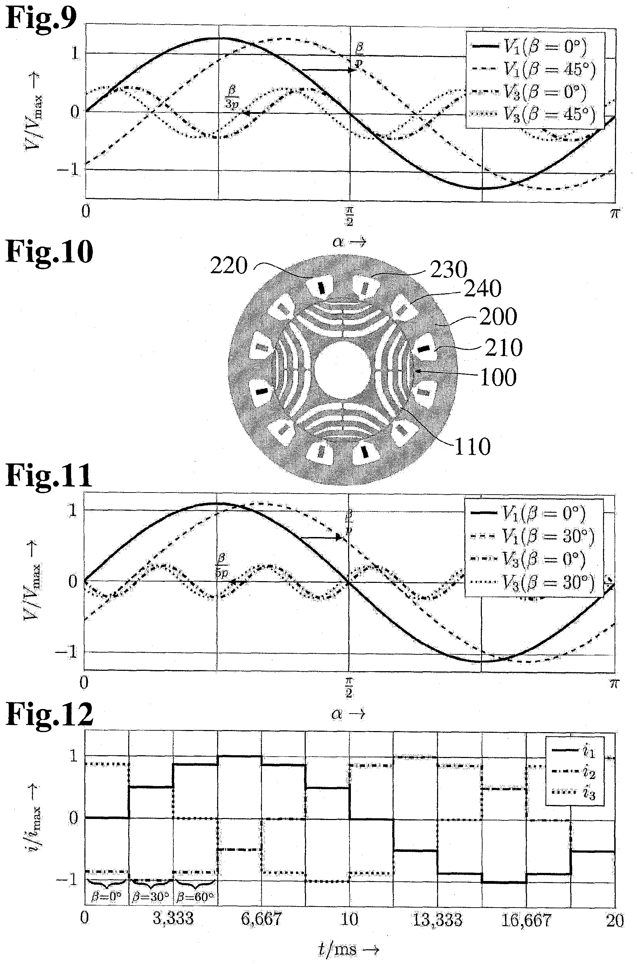

Aus der Fourier-Zerlegung geht hervor, dass wie in Figur 9 dargestellt, die Rotationsrichtung der Grundwelle und z. B. der dritten Harmonischen V₃ bei Änderung des Bestromungswinkels β unterschiedlich ist. Durch diese Eigenschaft treffen sich die Nulldurchgänge der Harmonischen alle β = 45°. Die Richtungsunabhängigkeit des Reluktanzmoments von der Feldrichtung führt dabei für jede Harmonische zu einem positiven Anstieg des Drehmomentes aus dem Nullpunkt. Somit entsteht bei Überlagerung der Nulldurchgänge aller Harmonischen im Luftspalt der gleiche Drehmomentverlauf, auch wenn diese nicht die gleiche Richtung aufweisen. Zum Erreichen einer kontinuierlichen Drehbewegung ist somit eine sequentielle Weiterschaltung des Bestromungswinkels β um jeweils Δβ = 45° notwendig.

Figur 10 zeigt eine alternative Ausgestaltung der erfindungsgemäßen Reluktanzmaschine. Bei dem Ausführungsbeispiel der Figur 10 wird ebenfalls eine zur Synchron-Reluktanzmaschine gemäß Figur 1 identische Rotorgeometrie 100 verwendet, die eine entsprechende Anzahl an ausgestanzten Flusssperren 110 aufweist. Im Gegensatz zur Variante der Figur 4 wird jedoch auf eine anderweitige Statorkonstruktion 200 zurückgegriffen, nämlich auf einen Ansatz mit dreisträngiger Wicklung auf Grundlage der Spulen 220, 230, 240. Der resultierende Stator 200 weist dazu insgesamt zwölf Nuten 210 auf.

Das dreisträngige Konzept basiert, wie auch der zweisträngige Ansatz gemäß Figur 4, auf der Ausnutzung der magnetischen Oberwellenfelder. Da sich die dritte Harmonische bei drei Wickelungssträngen 220, 230, 240 zu Null addieren, ist hier jedoch die fünfte Harmonische ausschlaggebend für die Festlegung des Weiterschaltungswinkels β. Im folgenden Abschnitt werden die Eigenschaften des dreisträngigen Ansatzes anhand einer Maschine mit q = 12 Statornuten und p = 2 Polpaaren kurz erläutert.

Das Wicklungssystem besteht aus drei um 120° verschobenen Durchmesserwickelungen 220, 230, 240, welche in Anlehnung an ein herkömmliches kontinuierliches Drehstromsystem mit
i₁ = sin(β),
i₂ = sin(β-120°),
i₃ = sin(β+120°)
bestromt werden. Der Verlauf der jeweiligen Wicklungsbestromung ist der Darstellung der Figur 12 zu entnehmen. Hierbei ist ersichtlich, dass bei einer vorliegenden Rotordrehzahl von 1.500 Umdrehungen pro Minute eine Umschaltung des Bestromungswinkels um β=30" für alle Ströme i₁, i₂ i₃ nach etwa Δt=1,65 ms auftritt.

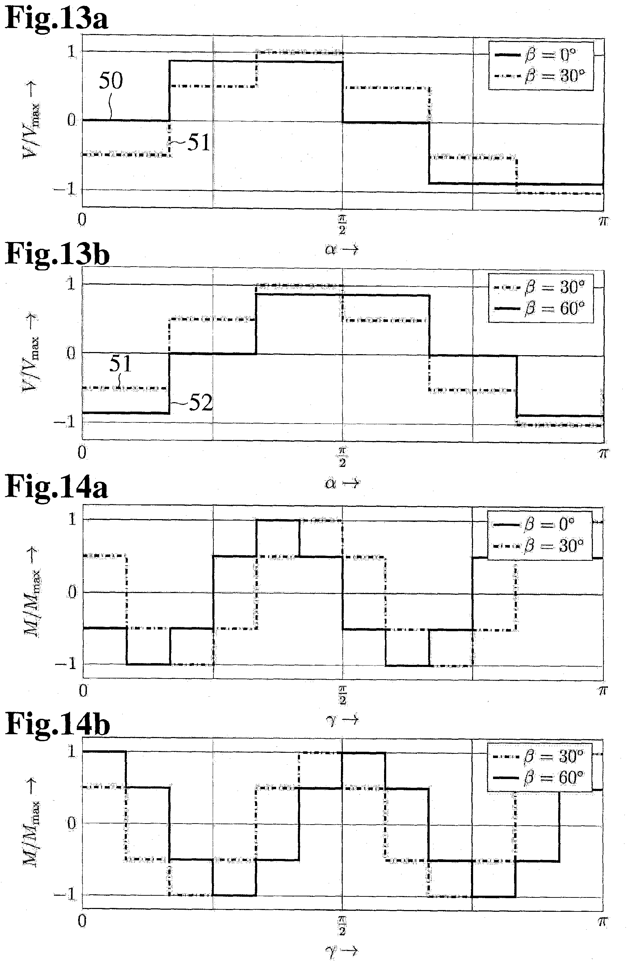

Durch Fourier-Analyse der Felderregerkurven 50, 51, 52, wie sie im Diagramm der Figur 13a, 13b für die Bestromungszustände bei β=0°, β=30° und β=60° dargestellt sind, erhält man Winkelabschnitte von jeweils Δβ = 30°, bei denen die Nulldurchgänge der Harmonischen zusammenfallen. In Figur 11 sind diese Zustände beispielhaft für die Grundwelle V₁ sowie die fünfte Harmonische V₅ dargestellt. Die resultierenden Drehmomente für die Felderregerkurven 50, 51, 52 sind den Diagrammdarstellungen Fig. 14a, 14b zu entnehmen.

Bezüglich der Vorteile der sequentiell bestromten Reluktanzmaschine gemäß Fig. 4 bzw. Figur 10 ist folgendes auszuführen.

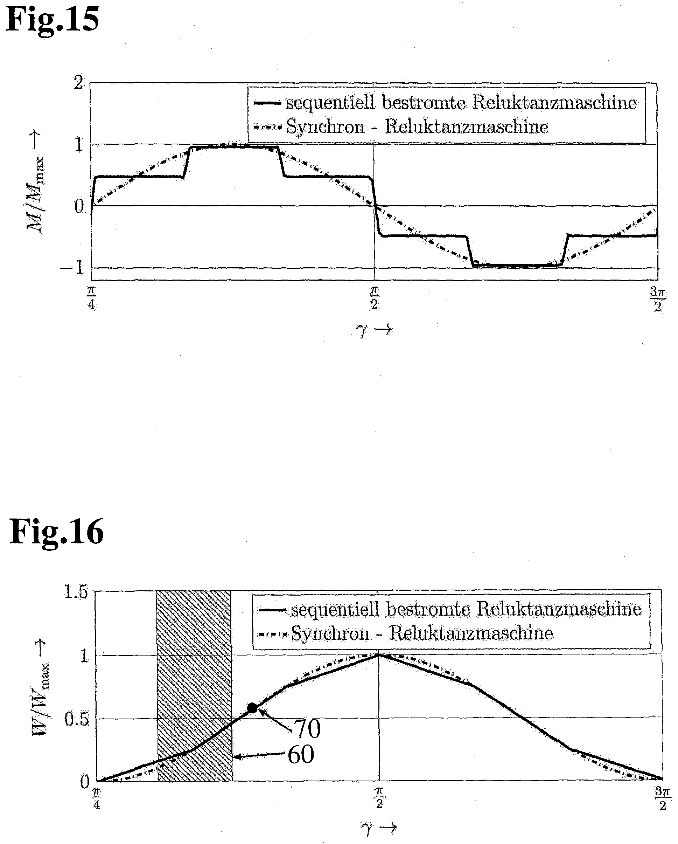

Die Ausnutzung der magnetischen Oberwellen führt bei der erfindungsgemäßen Reluktanzmaschine zu einem steilen Drehmomentanstieg aus dem Nullpunkt (vgl. Figur 15). Bei einem positiven Nulldurchgang des Drehmoments ist bei beiden Maschinen die magnetische Energie minimal. Die nichtlinearen Eigenschaften des Elektrobleches des Rotors 10, 100 unterstützen dabei die Eigenschaft des schnellen Drehmomentanstiegs. Der Grund dafür liegt in der magnetischen Leitfähigkeit des Bleches, die bei zunehmender Flussdichte (steigendem Energieniveau) kleiner wird.

Bei der sequentiell bestromten Reluktanzmaschine besteht die Möglichkeit, den Betriebsbereich 60 des jeweiligen Bestromungszustands nahe an das Energieminimum zu legen. Siehe hierzu Figur 16. Durch die Rotation des Rotors 10, 100 ändert sich der Rotorlagewinkel γ, sodass die magnetische Energie W im System ansteigt. Nach Erreichen eines Umschaltpunktes wird der jeweils folgende Bestromungszustand eingeschaltet, sodass sich die Systemenergie wieder im Bereich des Minimums befindet.

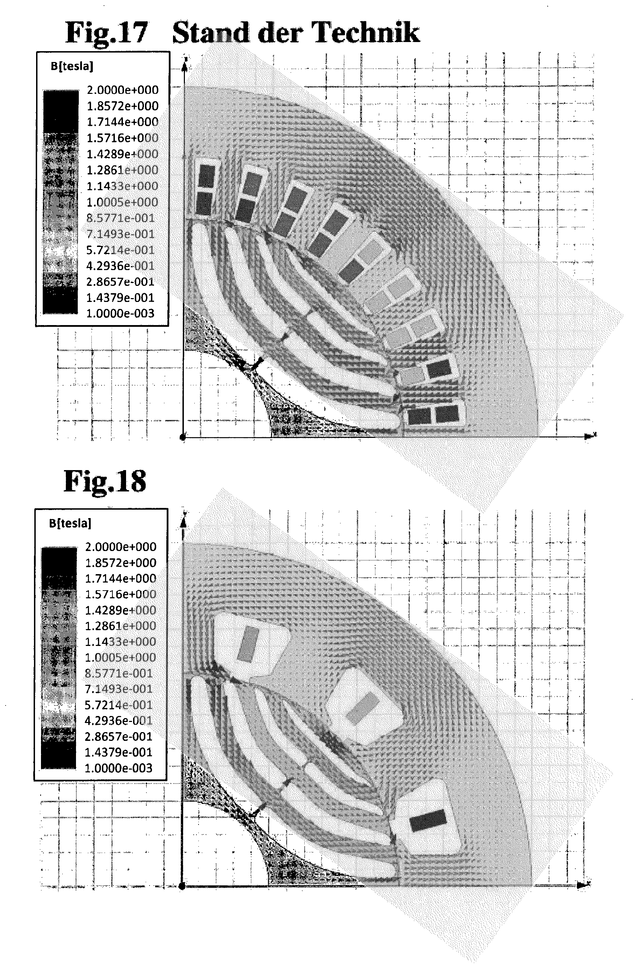

Bei geschickter Auslegung der Maschine kann der Betriebsbereich 60 so gewählt werden, dass die magnetische Energie W im Vergleich zum stationären Betriebspunkt 70 der Synchron-Reluktanzmaschine geringer ist. Dies führt bei gleichem Drehmoment beider Maschinen zu einer geringeren maximalen Flussdichte im Eisen. In den Figuren 17 und 18 sind die maximalen Flussdichten B bei Betrieb am Bemessungspunkt anhand der 5,5 kW Maschinen dargestellt. Figur 17 zeigt dabei die Flussdichten bei einer konventionellen Maschine gemäß Figur 1 wohingegen die Figur 18 den optimierten Verlauf der maximalen Flussdichte bei der Reluktanzmaschine gemäß Figur 10 zeigt.

Diese Eigenschaft der sequentiell bestromten Reluktanzmaschine führt zu Freiheitsgraden in der Auslegung der Maschine. Zum einen besteht die Möglichkeit, die Drehmomentdichte der Maschine bei konstantem Volumen zu erhöhen. Eine weitere Möglichkeit besteht in der Erhöhung der Nutfläche, wodurch bei gleichem Nutfüllfaktor die Kupferverluste reduziert werden können.

## Patentansprüche

1. Verfahren zum Betrieb einer Synchron-Reluktanzmaschine, die einen Rotor aus einem weichmagnetischen Material mit einer geraden Anzahl an ausgeprägten Polen sowie einen Stator mit einer mehrsträngigen versetzten Durchmesserwicklung umfasst, wobei die Stränge der Durchmesserwicklungen mit zueinander phasenverschobenen Strömen bestromt werden und die Bestromungszustände in Abhängigkeit des Rotorwinkels sprunghaft geändert werden, wobei für die Definition der Strangströme eine trigonometrische Stromfunktion gewählt wird, **dadurch gekennzeichnet, dass** der Bestromungswinkel sequentiell um einen definierten Delta-Bestromungswinkel weitergeschaltet wird, wobei der Delta-Bestromungswinkel gemäß β=2π/(2*p*s) gewählt wird, wobei p die Anzahl der Polpaare des Rotors/Stators und s die Strangzahl des Stators ist.

2. Verfahren nach Anspruch 1, **dadurch gekennzeichnet, dass** die Änderung der Bestromungszustände derart gewählt ist, so dass Nulldurchgänge aller Harmonischen der resultierenden Felderregerkurve im Luftspalt zusammenfallen.

3. Verfahren nach einem der vorhergehenden Ansprüche, **dadurch gekennzeichnet, dass** der Schaltzeitpunkt zur Änderung der Bestromungszustände der Stränge kurz vor oder im Zeitpunkt des Erreichens des Verdrehwinkels mit maximalem Drehmoment für den sequentiell nächstfolgenden Bestromungszustand erfolgt.

4. Verfahren nach einem der vorhergehenden Ansprüche, **dadurch gekennzeichnet, dass** die Schaltung der Bestromungszustände in Richtung des magnetischen Flusses bzw. in Rotordrehrichtung erfolgt.

5. Verfahren nach einem der vorhergehenden Ansprüche, **dadurch gekennzeichnet, dass** der Rotor vierpolig ist und der Stator eine zweisträngige um 90° versetzte Durchmesserwicklung aufweist, wobei der Stromverlauf der Stränge mit einer Cosinus- und Sinus-Funktion bestimmt wird und eine sequentielle Weiterschaltung des Bestromungswinkels um 45° erfolgt.

6. Verfahren nach einem der Ansprüche 1 bis 4, **dadurch gekennzeichnet, dass** der Rotor vierpolig ist und der Stator eine dreisträngige um 120° versetzte Durchmesserwicklung umfasst, wobei der Stromverlauf für die Stränge durch eine Sinusfunktion bestimmt wird, die für die einzelnen Stränge um 120° phasenverschoben ist, und eine sequentielle Weiterschaltung des Bestromungswinkels um 30° erfolgt.

7. Reluktanzmaschine mit einem Stator, der eine mehrsträngige Durchmesserwicklung umfasst, und mit einem Rotor aus weichmagnetischem Material mit einer geradzahligen Anzahl an ausgeprägten Polen, die durch die Anordnung von Flusssperren ausgebildet sind, sowie mit einer Motorsteuerung zur Ausführung des Verfahrens gemäß einem der vorhergehenden Ansprüche.

8. Reluktanzmotor nach Anspruch 7, **dadurch gekennzeichnet, dass** der Stator acht oder zwölf Statornuten zur Ausbildung einer zwei- oder dreisträngigen Durchmesserwicklung umfasst.

## Claims

1. Method for operating a synchronous reluctance machine, which comprises a rotor made of a soft magnetic material having an even number of distinct poles, and a stator having a multi-strand offset full-pitch winding, wherein the strands of the full-pitch windings are energized using currents that are phase-shifted with respect to one another and the energization states are rapidly changed depending on the rotor angle, wherein a trigonometric current function is selected for the definition of the strand currents, **characterized in that** the energization angle is sequentially advanced by a defined delta-energization angle, wherein the delta-energization angle is selected in accordance with β=2Π/(2*p*s), wherein p is the number of pole pairs of the rotor/stator and s is the number of strands of the stator.

2. Method according to Claim 1, **characterized in that** the change of the energization states is selected in such a way that zero crossings of all harmonics of the resulting field excitation curve in the air gap coincide.

3. Method according to one of the preceding claims, **characterized in that** the switching time for changing the energization states of the strands occurs shortly before or at the time of reaching the angle of rotation having the maximum torque for the energization state that is next sequentially.

4. Method according to one of the preceding claims, **characterized in that** the energization states are switched in the direction of the magnetic flux or in the direction of rotation of the rotor.

5. Method according to one of the preceding claims, **characterized in that** the rotor has four poles and the stator has a two-strand full-pitch winding that is offset by 90°, wherein the current profile of the strands is determined using a cosine and sine function and the energization angle is sequentially advanced by 45°.

6. Method according to one of Claims 1 to 4, **characterized in that** the rotor has four poles and the stator comprises a three-strand full-pitch winding that is offset by 120°, wherein the current profile for the strands is determined by a sine function that is phase-shifted by 120° for the individual strands and the energization angle is sequentially advanced by 30°.

7. Reluctance machine having a stator, which comprises a multi-strand full-pitch winding, and having a rotor made of soft magnetic material having an even number of distinct poles that are formed by the arrangement of flux barriers, and having a motor controller for executing the method according to one of the preceding claims.

8. Reluctance motor according to Claim 7, **characterized in that** the stator comprises eight or twelve stator slots for forming a two-strand or three-strand full-pitch winding.

## Revendications

1. Procédé de conduite d'une machine asynchrone à réluctance qui comporte un rotor en matériau magnétique doux doté d'un nombre pair de pôles saillants ainsi qu'un stator doté d'un enroulement diamétral à plusieurs barres,
les barres des enroulements diamétraux étant alimentées en courants déphasés les uns par rapport aux autres et les états d'alimentation en courant étant modifiés brusquement en fonction de l'angle du rotor,
une fonction trigonométrique de courant étant sélectionnée pour la définition des courants de barre,
**caractérisé en ce que**
l'angle d'alimentation en courant est avancé séquentiellement d'un angle delta d'alimentation en courant défini,
**en ce que** l'angle d'alimentation en courant est sélectionné selon la formule β=2π/(2*p*s), dans laquelle p représente le nombre de paires de pôles du rotor/stator et s le nombre de barres du stator.

2. Procédé selon la revendication 1, **caractérisé en ce que** la modification des états d'alimentation en courant est sélectionnée de telle sorte que les passages par zéro de toutes les harmoniques de la courbe résultante d'excitation du champ coïncident.

3. Procédé selon l'une des revendications précédentes **caractérisé en ce que** l'instant de commutation servant à modifier les états d'alimentation en courant des barres a lieu peu avant ou en même temps que l'instant où l'angle de rotation correspond au couple de rotation maximum de l'état d'alimentation en courant suivant de la séquence.

4. Procédé selon l'une des revendications précédentes **caractérisé en ce que** la commutation des états d'alimentation en courant a lieu dans le sens du flux magnétique ou dans le sens de rotation du rotor.

5. Procédé selon l'une des revendications précédentes **caractérisé en ce que** le rotor compte quatre pôles et le stator présente un enroulement diamétral à deux barres décalées de 90°, l'évolution du courant des barres étant définie par une fonction sinus ou cosinus et l'avance séquentielle de l'angle d'alimentation en courant étant de 45°.

6. Procédé selon l'une des revendications 1 à 4, **caractérisé en ce que** le rotor compte quatre pôles et le stator présente un enroulement diamétral à trois barres décalées de 120°, l'évolution du courant des barres étant définie par une fonction sinus déphasée de 120° entre les différentes barres et l'avance séquentielle de l'angle d'alimentation en courant étant de 30°.

7. Machine à réluctance présentant un stator doté d'un enroulement diamétral à plusieurs barres et un rotor en matériau magnétique doux doté d'un nombre pair de pôles saillants formés par le placement de barrières au flux, ainsi que d'une commande de moteur qui met en œuvre l'une des revendications précédentes.

8. Moteur à réluctance selon la revendication 7, **caractérisé en ce que** le stator comporte huit ou douze rainures de stator formant un enroulement diamétral à deux ou trois barres.
